# EUROPÄISCHE PATENTSCHRIFT

(11) **EP 3 433 152 B1**
(45) Veröffentlichungstag und Bekanntmachung des Hinweises auf die Patenterteilung: **28.09.2022**
(21) Anmeldenummer: 17706175.1
(22) Anmeldetag: 13.02.2017
(51) Int. Cl.: B60W 50/00, B60W 40/04, G06T 1/20, G06K 9/00

(54) **VERFAHREN ZUR AUSWERTUNG VON UMFELDDATEN IN EINEM STEUERGERÄT EINES KRAFTFAHRZEUGS, STEUERGERÄT UND KRAFTFAHRZEUG**
METHOD FOR EVALUATING ENVIRONMENT DATA IN A CONTROL UNIT OF A MOTOR VEHICLE, CONTROL UNIT, AND MOTOR VEHICLE
PROCÉDÉ D'ÉVALUATION DE DONNÉES D'ENVIRONNEMENT DANS UN APPAREIL DE COMMANDE D'UN VÉHICULE AUTOMOBILE, APPAREIL DE COMMANDE ET VÉHICULE AUTOMOBILE

(30) Priorität: 10.05.2016 DE 102016005730
(43) Veröffentlichungstag der Anmeldung: 30.01.2019
(73) Patentinhaber: Audi AG, 85045 Ingolstadt (DE)
(72) Erfinder: LAUER, Christoph, 85051 Ingolstadt (DE); KAMMENHUBER, Alexander, 80802 München (DE)
(86) Internationale Anmeldenummer: PCT/EP2017/053153
(87) Internationale Veröffentlichungsnummer: WO 2017/194211

(56) Entgegenhaltungen:
- DE-A1-102014 014 858
- US-A1- 2013 325 306
- US-A1- 2014 172 226
- MATTHEW MCNAUGHTON ET AL: "Motion planning for autonomous driving with a conformal spatiotemporal lattice", ROBOTICS AND AUTOMATION (ICRA), 2011 IEEE INTERNATIONAL CONFERENCE ON, 9. Mai 2011 (2011-05-09), Seiten 4889-4895, XP055367426, DOI: 10.1109/ICRA.2011.5980223 ISBN: 978-1-61284-386-5
- Holger Berndt Band: "Schriftenreihe des Instituts für Mess-, Regel-und Mikrotechnik Fahrerabsichtserkennung und Gefährlichkeitsabschätzung für vorausschauende Fahrerassistenzsysteme", , 12 February 2016 (2016-02-12), pages 93-106, XP055599926, DOI: 10.18725/OPARU-3259 ISBN: 978-3-941543-20-1 Retrieved from the Internet: URL:https://oparu.uni-ulm.de/xmlui/bitstre am/handle/123456789/3286/vts_9933_15148.pd f?sequence=1&isAllowed=y [retrieved on 2019-06-26]

## Beschreibung

Die Erfindung betrifft ein Verfahren zur Auswertung von wenigstens teilweise aus Sensordaten wenigstens eines Umfeldsensors abgeleiteten Umfelddaten in einem Steuergerät eines Kraftfahrzeugs, wobei wenigstens ein Auswertungsschritt als Eingangsdaten einen Umfelddatensatz verwendet. Daneben betrifft die Erfindung ein Steuergerät für ein Kraftfahrzeug und ein Kraftfahrzeug.

Moderne Fahrzeugsysteme, insbesondere Fahrerassistenzsysteme, führen aufgrund von insbesondere aus Sensordaten wenigstens eines Umfeldsensors des Kraftfahrzeugs ermittelten Umgebungsdaten Fahrsituationsanalysen durch, um als Ausgangsdaten Ergebnisdaten zu erhalten, anhand derer durch Maßnahmenkriterien überprüft werden kann, ob eine Maßnahme erforderlich ist, beispielsweise ein Fahreingriff, eine Informationsausgabe an den Fahrer oder dergleichen. Das bedeutet, es werden Auswertungsschritte realisierende Algorithmen zur Umfeldinterpretation genutzt. Besonderes wesentlich ist eine verlässliche, robuste und genaue Fahrsituationsanalyse bei Fahrzeugsystemen, die zur wenigstens teilweise automatischen Führung des Kraftfahrzeugs ausgebildet sind (autonomes beziehungsweise autopilotiertes Fahren). Ziel der Auswertungsschritte ist hier die Verarbeitung der Umfelddaten zum Erkennen spezieller Fahrsituationen und die Ableitung adäquater Fahrzeugreaktionen hierauf.

Problematisch bei der Umfeldinterpretation ist, dass bei der sequenziellen Berechnung der Teilschritte der Auswertungsschritte aufgrund der nötigen Echtzeitfähigkeit das Verarbeitungsdetail bei abnehmendem Datenvolumen zunimmt beziehungsweise mit zunehmendem Datenvolumen abnimmt. Um eine hinreichend schnelle Berechnung zu ermöglichen, ist daher üblicherweise vorgesehen, in wenigstens einem Auswahlschritt eine Vorauswahl aus den Umfelddaten zu treffen, um möglicherweise nicht relevante Hindernisse auszuschließen, bei gridbasierten Berechnungen beispielsweise die räumliche Auflösung reduzieren und dergleichen. Dies führt aber dazu, dass die Interpretation der Fahrsituation in Auswertungsschritten und die Ableitung von Maßnahmen immer nur auf einer Teilmenge der insgesamt verfügbaren Umgebungsdaten ausgeführt wird. Die Reduktion auf eine Teilmenge der Umfelddaten ist aber ein heuristischer Prozess, der zu einem qualitativ schlechteren Ergebnis führen wird.

Aus DE 10 2014 014 858 A1 ist ein Steuergerät für ein Kraftfahrzeug bekannt, welches zur Ausführung wenigstens einer Sensordaten eines Sensors auswertenden Funktion ausgebildet ist. Das Steuergerät umfasst eine erste Recheneinheit, welche einem Sicherheitskriterium entspricht, sowie eine zweite, nicht dem Sicherheitskriterium entsprechende Recheneinheit, welche leistungsfähiger als die erste Recheneinheit ist und zur Ermittlung von Ergebnisdaten der Funktion durch Auswertung der Sensordaten ausgebildet ist. Die erste Recheneinheit ist zur Validierung der Ergebnisdaten der zweiten Recheneinrichtung ausgebildet.

In M. McNaughton et al., Robotics and Automation (ICRA), 2011 IEEE International Conference on, 9. Mai 2013, S. 4889-4895, DOI: 10.1109/ICRA.2011.5980223 wird eine Bewegungsplanung für autonomes Fahren mittels eines konformen spatiotemporalen Gitters beschrieben.

US 2013/0325306 A offenbart ein Verfahren zur verteilten Steuerung einer Gruppe von Fahrzeugen, welche sowohl koordinierte Fahrzeuge, bei denen eine kooperative Steuerung stattfindet, als auch nicht-koordinierte Fahrzeuge, die einer vorhersagbaren Dynamik folgen, umfasst. Dabei werden Trajektorien zwischen den Fahrzeugen für eine Berechnung von Prädiktionstrajektorien kommuniziert.

Der Erfindung liegt daher die Aufgabe zugrunde, eine Möglichkeit zur hochdetaillierten Auswertung von Fahrsituationen, beschrieben durch Umgebungsdaten, auch bei einem hohen vorliegenden Datenvolumen zu ermöglichen.

Zur Lösung dieser Aufgabe ist bei einem Verfahren der eingangs genannten Art erfindungsgemäß vorgesehen, dass der Umfelddatensatz in zeitlich und logisch unabhängige Segmentdatensätze zerlegt wird, welche im Auswertungsschritt wenigstens teilweise in zeitlich parallelisierten Teilschritten unter Verwendung einer parallelen, insbesondere mehr als 100 zeitlich parallele Berechnungen erlaubenden, Verarbeitungsarchitektur ausgewertet werden, wobei einer des wenigstens einen Auswertungsschritts eine von der aktuellen, durch die Sensordaten beschriebenen Fahrsituation ausgehende Prädiktion mit mehreren Hypothesen ist, wobei unterschiedliche durch Segmentdatensätze beschriebene Hypothesen als Teilschritte mit zugeordneten Segmentdatensätzen zeitlich parallel berechnet werden, wobei die Hypothesen Kombinationen von potentiellen Trajektorien von dynamischen, durch die Sensordaten beschriebenen Objekten umfassen und Teil eines Umfeldmodells des Umfelddatensatzes sind, welches zusätzlich eine Umfeldbeschreibung umfasst.

Grundsätzlich wird erfindungsgemäß mithin vorgeschlagen, eine parallele Datenverarbeitung auch bei der Interpretation von Fahrsituationen auf der Grundlage von Umfelddaten einzusetzen, insbesondere im Rahmen von Auswertungsschritten eines Fahrzeugsystems zur wenigstens teilweise automatischen Führung des Kraftfahrzeugs, wobei durch den wenigstens einen Auswertungsschritt letztlich Ergebnisdaten entstehen, die durch wenigstens ein Maßnahmenkriterium ausgewertet werden können, um entsprechende Maßnahmen zur Bewältigung der Fahrsituation abzuleiten. Auf diese Weise ist es möglich, sowohl das Verarbeitungsdetail als auch das Datenvolumen auf einem hohen Niveau zu halten und mithin detailliertere Analysen der Fahrsituation, also Umfeldinterpretationen, zu erlauben. Dabei werden mithin Datenpakete der Umfeldinterpretation in dem wenigstens einen Auswertungsschritt auf eine parallelisierbare Verarbeitungsarchitektur abgebildet, das bedeutet, es wird ein Umfelddatensatz, insbesondere auch umfassend ein Umfeldmodell, derart erzeugt, dass er sich in zeitlich und logisch unabhängige Segmentdatensätze zerlegen lässt. Im Idealfall werden in diesem vorbereitenden Aufteilungsschritt keine Umfelddaten abstrahiert oder zusammengefasst.

Das bedeutet, dass der Informationsgehalt der Umfelddaten nicht reduziert wird, wodurch ein großer Vorteil gegenüber dem Stand der Technik gegeben ist. Der Informationsgehalt der ursprünglichen Sensordaten wird beibehalten und die Daten werden durch die unabhängige Segmentierung auf parallelen Berechnungseinheiten in Echtzeit ausgewertet.

Nachdem bei der Umfeldinterpretation eine Vielzahl an Möglichkeiten zur Zerlegung in logische und zeitlich unabhängige Segmente und Teilschritte besteht, sind parallele Berechnungen erlaubende Verarbeitungsarchitekturen bevorzugt, die eine Vielzahl solcher paralleler Berechnungen, beispielsweise mehr als 100, insbesondere mehr als 1000 oder 10000, ermöglichen. Daher sieht eine zweckmäßige Weiterbildung der Erfindung vor, dass eine einen graphischen Prozessor, insbesondere eine GPU, umfassende Verarbeitungsarchitektur verwendet wird. Derartige graphische Prozessoren sind häufig beispielsweise auf Graphikkarten in verschiedenen Recheneinrichtungen zu finden, aber auch integriert realisierbar. Üblicherweise werden derartige graphische Prozessoren zur Realisierung von Algorithmen zum Rendern von Darstellungen verwendet, die mithin beispielsweise Bildwerte für einzelne Pixel einer entsprechenden Darstellungseinrichtung ermitteln. Im Rahmen der vorliegenden Erfindung ist es dabei von besonderem Vorteil, wenn die Segmentdatensätze als pixelähnliche und/oder pixelgruppenähnliche Datenstrukturen verwendet werden und/oder wenigstens ein einem Rendern nachempfundener Algorithmus innerhalb des Teilschrittes verwendet wird. Das bedeutet, die Elemente des Auswertungsschrittes, also der Umfelddatensatz in seiner Unterteilbarkeit und die algorithmische Realisierung der Auswertung, werden gezielt auf die Parallelisierung, insbesondere in einem graphischen Prozessor, hin ausgelegt. Es hat sich gezeigt, dass dies gerade bei der Umfeldinterpretation überraschenderweise äußerst gut gelingt, sodass die Vorteile der parallelen Verarbeitungsarchitekturen, insbesondere von graphischen Prozessoren, ideal ausgenutzt werden können.

Erfindungsgemäß ist einer des wenigstens eines Auswertungsschritts eine von der aktuellen, durch die Sensordaten beschriebenen Fahrsituation ausgehende Prädiktion mit mehreren Hypothesen, wobei unterschiedliche durch Segmentdatensätze beschriebene Hypothesen und gegebenenfalls zusätzlich unterschiedliche Hypothesenberechnungsschritte einer Hypothese als Teilschritte mit zugeordneten Segmentdatensätzen zeitlich parallel berechnet werden. Ein wichtiger Bestandteil zum Verständnis und zur Beurteilung einer Fahrsituation ist die Abschätzung von deren zukünftiger Entwicklung, also eine Prädiktion. Beispielsweise kann in die Zukunft gerechnet werden, wie wahrscheinlich Kollisionen oder sonstige ungünstige zukünftige Fahrverhältnisse sind, um hierauf basierend Maßnahmen zu ergreifen, beispielsweise Warnungen an den Fahrer auszugeben und/oder, insbesondere im bevorzugten Fall der wenigstens teilweise automatischen Führung des Kraftfahrzeugs, Fahreingriffe zu ermitteln, was in einem nachfolgenden Schritt geschehen kann. Mit anderen Worten kann auch gesagt werden, dass die Hypothesen durchaus als Repräsentationsformen der aktuellen Fahrsituation aufgefasst werden können. Bei den Hypothesen handelt es sich um Kombinationshypothesen, die als Produkt möglicher Kombinationen von detektierten, durch die Sensordaten beschriebenen Umfeldobjekten, und insbesondere bevorzugt als Produkt aller möglichen solchen Kombinationen, mithin durch Kombination verschiedener unterschiedlicher Verhaltensweisen der Objekte, entstehen. Grundsätzliche Vorgehensweisen zur Ermittlung solcher Hypothesen und zu deren Prädiktion und Interpretation wurden im Stand der Technik bereits beschrieben und sollen daher hier nicht im Detail dargelegt werden.

Insbesondere ist es im Rahmen der vorliegenden Erfindung besonders bevorzugt, sowohl hinsichtlich einzelner Hypothesen, als auch zusätzlich innerhalb der Hypothesen eine Parallelisierung von Berechnungsvorgängen zu erreichen. Dann ist eine zeitliche Optimierung trotz großen Datenvolumens auf mehreren Ebenen möglich.

Insbesondere kann konkret vorgesehen sein, dass die Berechnung von Ausgangsdaten zu einer Hypothese die Lösung eines Gleichungssystems unter Betrachtung unterschiedlicher zukünftiger Zeitintervalle umfasst, wobei einzelne Zeitintervalle in einzelnen Hypothesenberechnungsschritten zeitlich parallel berechnet werden. Der Zeitabschnitt, auf den sich die Prädiktion erstreckt, kann mithin in Zeitintervalle unterteilt werden, wobei bereits Algorithmen vorgeschlagen wurden, die es erlauben, Ausgangsdaten, also Ergebnisdaten, für verschiedene Zeitintervalle auch unabhängig voneinander zu berechnen, mithin auch den Prozess der Lösung komplexerer Gleichungssysteme der Parallelisierung zugänglich zu machen. Dies kann im Rahmen der vorliegenden Erfindung, wo derartige komplexe Gleichungssysteme, die über entsprechende Algorithmen lösbar sind, häufig vorkommen, mithin zweckmäßig genutzt werden, um die angesprochene Parallelisierung auch innerhalb einzelner Hypothesen zu erlauben.

Die Hypothesen umfassen Kombinationen von potentiellen Trajektorien von dynamischen, durch die Sensordaten beschriebenen Objekten. Die gängigste Annahme für dynamische, durch die Sensordaten beschriebene Objekte im Rahmen der Analyse und Bewertung von Fahrsituationen sind zukünftige Bewegungswege der dynamischen Objekte und deren zeitlicher Ablauf, mithin Trajektorien. Es handelt sich auch in diesem Fall, wie dargelegt wurde, bei den Hypothesen um Kombinationshypothesen, das bedeutet, Kombinationen möglicher, angenommener Trajektorien bevorzugt für alle dynamischen, detektierten Objekte im Umfeld des Kraftfahrzeugs. Existieren beispielsweise drei dynamische Umfeldobjekte, können beispielsweise für jedes dieser Umfeldobjekte elf Klassen von Trajektorien zu betrachten sein, mithin elf einzelne Bewegungshypothesen. Hieraus können mithin 1331 Trajektorienkombinationen als Kombinationshypothesen konstruiert werden. Wird nun zusätzlich für jede Trajektorie der zeitliche Verlauf in 26 gleich große Zeitintervalle unterteilt, ergibt sich eine Gesamtzahl von 34606 Segmentdatensätzen. Diese haben ein sehr großes Volumen, sodass eine sequenzielle Abarbeitung sehr lange dauern würde. Durch die Konstruktion der Segmentdatensätze im Hinblick auf eine parallele Verarbeitung ergibt sich jedoch eine ausgezeichnete Parallelisierbarkeit, sodass eine echtzeitfähige Berechnung in einem automotiven Steuergerät ermöglicht wird.

Die hier vorgenommene Parallelisierung im Rahmen der Analyse und Bewertung einer Fahrsituation kann auch dahingehend erweitert werden, dass ein weiterer des wenigstens einen Auswertungsschrittes eine Interpretation der Ergebnisse der Prädiktion umfasst, sodass auch hier eine Parallelisierung einzelner Berechnungsvorgänge, mithin von Teilschritten, ermöglicht wird. Insbesondere kann in diesem Kontext vorgesehen sein, dass jeweils auf wenigstens eine Hypothese bezogene Interpretationsschritte der Interpretation als Teilschritte zeitlich parallel ausgeführt werden. Zumindest solange mithin die Ergebnisse der einzelnen Hypothesen noch nicht oder nur teilweise zusammengeführt werden, ist eine Parallelisierung auch im Rahmen der Interpretation noch möglich; selbstverständlich können auch bei Vorkommen anderer parallelisierbarer Algorithmen im Rahmen der Interpretation Parallelisierungen vorgenommen werden, sodass sich eine möglichst optimale Nutzung der parallelisierbaren Verarbeitungsarchitektur ergibt.

Zweckmäßigerweise kann als wenigstens ein Teil des Umgebungsdatensatzes ein durch Fusion von Sensordaten ermitteltes Umfeldmodell verwendet werden. Umfeldmodelle, die durch Fusion von Sensordaten ermittelt werden können, wurden im Stand der Technik bereits beschrieben und stellen mithin eine Gesamtbeschreibung des durch die Umfeldsensoren erfassten Umfelds dar, die in einem Format vorliegt, welches insbesondere von mehreren Fahrzeugsystemen genutzt werden kann. Dabei kann insbesondere jedoch auch vorgesehen sein, dass das Umfeldmodell auch die Hypothesen umfasst und/oder vollständig den Umfelddatensatz bildet. Wie bereits erwähnt wurde, stellen im Hinblick auf das Verständnis und die Bewertung einer aktuellen Fahrsituation auch Hypothesen einen äußerst wichtigen Aspekt dar, der mithin in das Umfeldmodell integriert werden kann. Bildet das Umfeldmodell mithin insgesamt den Umfelddatensatz, lässt sich dieses entsprechend unterteilen, um für die Parallelisierung geeignete Segmentdatensätze zu bilden und entsprechende Teilschritte durchzuführen.

Neben dem Verfahren betrifft die vorliegende Erfindung auch ein Steuergerät für ein Kraftfahrzeug, umfassend eine eine parallele Verarbeitungsarchitektur umfassende Auswertungseinheit, die zur Durchführung des erfindungsgemäßen Verfahrens ausgebildet ist. Dabei kann es sich insbesondere um ein Steuergerät eines sogenannten zentralen Fahrerassistenzsystems handeln, welches für verschiedene Fahrzeugsysteme aufbereitete Umfelddaten bereitstellt, beispielsweise mithin auch eine Fusionierung der Sensordaten zu einem Umfeldmodell durchführt. Sämtliche Ausführungen bezüglich des erfindungsgemäßen Verfahrens gelten analog für das erfindungsgemäße Steuergerät, so dass auch mit diesem die bereits genannten Vorteile erhalten werden können. Dies gilt auch für ein erfindungsgemäßes Kraftfahrzeug, welches ein erfindungsgemäßes Steuergerät aufweist. Auf dem Steuergerät kann das Verfahren in Form eines Computerprogramms, das die Schritte des erfindungsgemäßen Verfahrens durchführt, wenn es auf dem Steuergerät ausgeführt wird, abgespeichert sein.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Ablaufplan des erfindungsgemäßen Verfahrens,
- Fig. 2: eine Skizze zu einer möglichen Fahrsituation, und
- Fig. 3: ein erfindungsgemäßes Kraftfahrzeug.

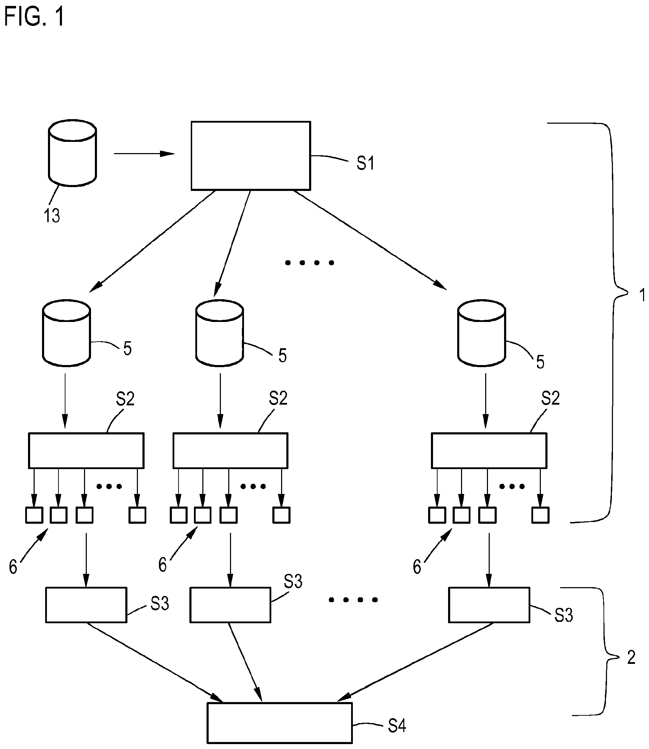

Fig. 1 zeigt einen Ablaufplan eines Ausführungsbeispiels des erfindungsgemäßen Verfahrens, wie es in den Betrieb eines Fahrzeugsystems eingebettet sein kann. Bei dem Fahrzeugsystem kann es sich bevorzugt um ein Fahrzeugsystem zur wenigstens teilweise automatischen Führung des Kraftfahrzeugs handeln. Um eine Fahrsituationsanalyse durchzuführen, werden hierbei in einem ersten Auswertungsschritt der Prädiktion als Ergebnisdaten Prädiktionsdaten ermittelt, welche in einem zweiten Auswertungsschritt, der Interpretation, interpretiert werden, um die Fahrsituation zu bewerten und geeignete Maßnahmen, die durch das Fahrzeugsystem auszuführen sind, auszuwählen. Das hier dargestellte Ausführungsbeispiel wird durch ein Steuergerät des Kraftfahrzeugs ausgeführt, welches eine zeitlich parallele Berechnungen erlaubende Verarbeitungsarchitektur, hier konkret einen graphischen Prozessor, aufweist.

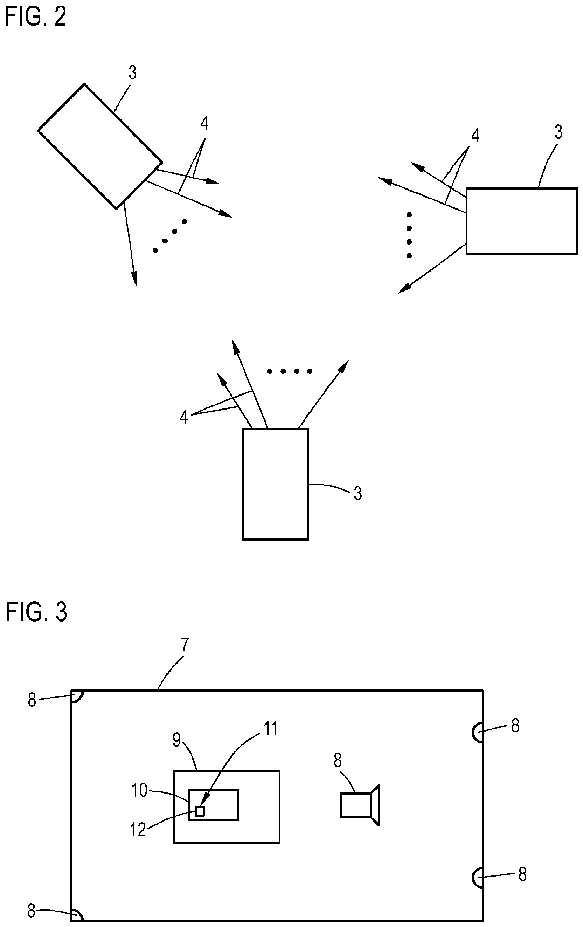

Ausgangspunkt für die in Fig. 1 zusammenfassend mit 1 bezeichnete Prädiktion als erster Auswertungsschritt ist ein Umfelddatensatz 13, der vorliegend ein Umfeldmodell umfasst. Das Umfeldmodell enthält zunächst eine Umfeldbeschreibung, die aus den aktuellen Sensordaten von Umfeldsensoren des Kraftfahrzeugs abgeleitet ist und insbesondere dynamische und statische Objekte im Umfeld des Kraftfahrzeugs beschreibt. Daneben bilden vorliegend auch Hypothesen einen Bestandteil des Umfeldmodells. Hypothesen betreffen angenommenes zukünftiges Verhalten für dynamische Objekte im Umfeld des Kraftfahrzeugs, wie durch die Prinzipskizze der Fig. 2 näher dargelegt werden soll. Dort sind beispielhaft drei dynamische Objekte 3 gezeigt, die durch die Sensordaten beschrieben werden. Jedes dieser dynamischen Objekte 3 kann sich nun in der Zukunft entlang einer Vielzahl möglicher Trajektorien 4 bewegen. Ziel der nun folgenden Prädiktion ist es nun, aus allen denkbaren Kombinationen der Trajektorien 4, also Kombinationshypothesen, die sich ergebenden zukünftigen Fahrsituationen als Prädiktionsdaten (als Ausgangsdaten/Ergebnisdaten) abzuleiten. Existieren beispielsweise für jedes dynamische Objekt 3 elf Trajektorien 4 (wobei letztlich jede konkret betrachtete Trajektorie 4 für eine Klasse von möglichen Trajektorien steht), existieren 11³, also 1331 Kombinationshypothesen, die ebenso im Umfelddatensatz 13 enthalten sind und für die die Prädiktion durchzuführen ist.

Um dies zu realisieren, werden in einem Aufteilungsschritt S1 die Umfelddaten des Umfelddatensatzes 13 in Segmentdatensätze 5 aufgeteilt, für die zeitlich unabhängig und logisch unabhängig, also ohne wechselseitige Abhängigkeiten, beispielsweise bei Zwischenergebnissen, prädiziert werden kann, wobei vorliegend jeder Segmentdatensatz 5 durch eine der 1331 Kombinationshypothesen definiert ist, mithin die entsprechend kombinierten Trajektorien 4 gemeinsam mit der Umfeldbeschreibung enthält. Die eigentliche Vorausberechnung erfolgt dann in einem Schritt S2, wobei diese allerdings wiederum in Teilschritte 6 zerfällt, die wiederum zeitlich und logisch unabhängig durchgeführt werden können. Dies beruht vorliegend darauf, dass der für die Vorausberechnung im Rahmen der Prädiktion 1 betrachtete Zeitabschnitt in gleichgroße Zeitintervalle unterteilt ist, die aufgrund der Verwendung eines geeigneten Algorithmus ebenso zeitlich parallelisiert berechnet werden können. Somit liegt nun eine Unterteilung in parallelisierbare Berechnungen nicht nur auf der Ebene der Hypothesen vor, sondern auch innerhalb der Hypothesen. Die Teilschritte 6 werden zumindest teilweise zeitlich parallelisiert durch den graphischen Prozessor des Steuergeräts ausgeführt, sodass letztlich in Echtzeit als Ergebnisdaten beziehungsweise Ausgangsdaten die Prädiktionsdaten erhalten werden können. Beispielsweise können über 100000, insbesondere über 1000000 Teilschritte 6 zeitlich parallelisiert werden, wobei vorliegend eine GPU als graphischer Prozessor verwendet wird.

Die Datenstruktur in dem Umfelddatensatz 13 und mithin auch in den Segmentdatensätzen 5 ist dabei bereits abgestimmt auf die verwendete parallele Verarbeitungsarchitektur, mithin den graphischen Prozessor, wobei dies auch für die verwendeten Algorithmen gilt, die sich in ihrer Struktur an zum Rendern genutzte Algorithmen anlehnen und somit besonders günstig mittels des graphischen Prozessors parallelisiert realisiert werden können.

Die Parallelisierung wird auch in einem folgenden Auswertungsschritt, der Interpretation 2, fortgeführt, wobei sich insbesondere Teilschritte S3 im Rahmen der Interpretation 2 auf Segmentdatensätze beziehen, die aus einzelnen Kombinationshypothesen beziehungsweise Unterkombinationen derselben erhalten wurden, ehe in einem Zusammenfassungsschritt S4 die Zusammenfassung zum Interpretationsergebnis erfolgt. Das Interpretationsergebnis kann als Grundlage für die Entscheidung dienen, welche Maßnahmen durch das Fahrzeugsystem durchgeführt werden.

Dabei ist darauf hinzuweisen, dass selbstverständlich auch die Teilschritte S3 wiederum, soweit möglich, in parallelisierbare Teilschritte 6 unterteilt werden können, was der Übersichtlichkeit halber nicht dargestellt ist. Auch im Rahmen der Interpretation 2 ist es also denkbar, die Parallelisierung weitestmöglich fortzuführen. So wird schließlich erreicht, dass die Prädiktion 1 und die Interpretation 2 ohne Einschränkung beziehungsweise Reduzierung der Umfelddaten in Echtzeit durchführbar sind.

Fig. 3 zeigt schließlich eine Prinzipskizze eines erfindungsgemäßen Kraftfahrzeugs 7, welches verschiedene, hier nur teilweise angedeutete Umfeldsensoren 8 aufweist. Die Sensordaten der Umfeldsensoren 8 werden einem Steuergerät 9 zur Verfügung gestellt, welches in der Lage ist, diese zum Erhalt einer Umfeldbeschreibung für ein Umfeldmodell zu fusionieren. Das Steuergerät 9 kann daher ein Steuergerät eines zentralen Fahrassistenzsystems sein. Es umfasst eine Auswertungseinheit 10, die als zeitlich parallele Berechnungen erlaubende Verarbeitungsarchitektur 11 einen graphischen Prozessor 12 aufweist. Die Auswertungseinheit ist zur Durchführung des erfindungsgemäßen Verfahrens ausgebildet.

## Patentansprüche

1. Verfahren zur Auswertung von wenigstens teilweise aus Sensordaten wenigstens eines Umfeldsensors (8) abgeleiteten Umfelddaten in einem Steuergerät eines Kraftfahrzeugs (7), wobei wenigstens ein Auswertungsschritt als Eingangsdaten einen Umfelddatensatz (13) verwendet, wobei der Umfelddatensatz (13) in zeitlich und logisch unabhängige Segmentdatensätze (5) zerlegt wird, welche im Auswertungsschritt wenigstens teilweise in zeitlich parallelisierten Teilschritten (6, S3) unter Verwendung einer parallelen, insbesondere mehr als 100 zeitlich parallele Berechnungen erlaubenden Verarbeitungsarchitektur (11) ausgewertet werden, wobei einer des wenigstens einen Auswertungsschritts eine von der aktuellen, durch die Sensordaten beschriebenen Fahrsituation ausgehende Prädiktion (1) mit mehreren Hypothesen ist, wobei unterschiedliche durch Segmentdatensätze (5) beschriebene Hypothesen als Teilschritte (6, S3) mit zugeordneten Segmentdatensätzen (5) zeitlich parallel berechnet werden, wobei die Hypothesen Kombinationen von potentiellen Trajektorien (4) von dynamischen, durch die Sensordaten beschriebenen Objekten (3) umfassen und Teil eines Umfeldmodells des Umfelddatensatzes (13) sind, welches zusätzlich eine Umfeldbeschreibung umfasst.

2. Verfahren nach Anspruch 1,
**dadurch gekennzeichnet,**
**dass** eine einen graphischen Prozessor (12), insbesondere eine GPU, umfassende Verarbeitungsarchitektur (11) verwendet wird.

3. Verfahren nach einem der vorangehenden Ansprüche,
**dadurch gekennzeichnet,**
**dass** ein weiterer des wenigstens einen Auswertungsschrittes eine Interpretation der Ergebnisse der Prädiktion (1) umfasst.

4. Verfahren nach Anspruch 3,
**dadurch gekennzeichnet,**
**dass** jeweils auf wenigstens eine Hypothese bezogene Interpretationsschritte der Interpretation als Teilschritte (6, S3) zeitlich parallel ausgeführt werden.

5. Verfahren nach einem der vorangehenden Ansprüche,
**dadurch gekennzeichnet,**
**dass** als wenigstens ein Teil des Umfelddatensatzes (13) ein durch Fusion von Sensordaten ermitteltes Umfeldmodell verwendet wird.

6. Steuergerät für ein Kraftfahrzeug (7), umfassend eine eine parallele Verarbeitungsarchitektur (11) umfassende Auswertungseinheit (10), die zur Durchführung eines Verfahrens nach einem der vorangehenden Ansprüche ausgebildet ist.

7. Kraftfahrzeug (7), aufweisend wenigstens einen Umfeldsensor (8) und ein Steuergerät (9) nach Anspruch 6.

## Claims

1. Method for evaluating environment data which are at least partially derived from sensor data of at least one environment sensor (8), in a control device of a motor vehicle (7), wherein at least one evaluation step uses an environment data set (13) as input data, wherein the environment data set (13) is broken down into temporally and logically independent segment data sets (5) which are evaluated in the evaluation step at least partially in temporally parallelised sub-steps (6, S3) by using a parallel processing architecture (11) which in particular permits more than 100 temporally parallel computations, wherein one of the at least one evaluation step is a prediction (1) with several hypotheses based on the current driving situation described by the sensor data, wherein different hypotheses described by segment data sets (5) are calculated temporally in parallel as sub-steps (6, S3) with associated segment data sets (5), wherein the hypotheses comprise combinations of potential trajectories (4) of dynamic objects (3) described by the sensor data and are a portion of an environment model of the environment data set (13) which additionally comprises an environment description.

2. Method according to claim 1,
**characterised in that**
a processing architecture (11) comprising a graphics processor (12), in particular a GPU, is used.

3. Method according to any of the preceding claims,
**characterised in that**
a further one of the at least one evaluation step comprises an interpretation of the results of the prediction (1).

4. Method according to claim 3,
**characterised in that**
interpretation steps of the interpretation relating to at least one hypothesis in each case are carried out temporally in parallel as sub-steps (6, S3).

5. Method according to any of the preceding claims,
**characterised in that**
an environment model determined by merging sensor data is used as at least a portion of the environment data set (13).

6. Control device for a motor vehicle (7), comprising an evaluation unit (10) which comprises a parallel processing architecture (11) and is designed to perform a method according to any of the preceding claims.

7. Motor vehicle (7) having at least one environment sensor (8) and a control device (9) according to claim 6.

## Revendications

1. Procédé d'évaluation de données d'environnement dérivées au moins partiellement de données de capteur au moins d'un capteur environnemental (8) dans un dispositif de commande d'un véhicule automobile (7), dans lequel au moins une étape d'évaluation utilise comme données d'entrée un jeu de données d'environnement (13), dans lequel le jeu de données d'environnement (13) est divisé en jeux de données de segment (5) indépendants temporellement et logiquement qui sont évalués dans l'étape d'évaluation au moins partiellement dans des étapes partielles (6, S3) effectuées en parallèle dans le temps en utilisant une architecture de traitement (11) parallèle, permettant en particulier plus de 100 calculs en parallèle dans le temps, dans lequel une des au moins une étape d'évaluation est une prédiction (1) partant de la situation de déplacement actuelle, décrite par les données de capteur avec plusieurs hypothèses, dans lequel différentes hypothèses décrites par des jeux de données de segment (5) sont calculées comme étapes partielles (6, S3) avec des jeux de données de segment (5) associés en parallèle dans le temps, dans lequel les hypothèses comportent des combinaisons de trajectoires potentielles (4) d'objets (3) dynamiques, décrits par les données de capteur et font partie d'un modèle environnemental du jeu de données d'environnement (13) qui comporte en outre une description environnementale.

2. Procédé selon la revendication 1,
**caractérisé en ce**
**qu'**une architecture de traitement (11) comprenant un processeur graphique (12), en particulier un GPU, est utilisée.

3. Procédé selon l'une quelconque des revendications précédentes,
**caractérisé en ce**
**qu'**une autre des au moins une étape d'évaluation comporte une interprétation des résultats de la prédiction (1).

4. Procédé selon la revendication 3,
**caractérisé en ce**
**que** respectivement des étapes d'interprétation liées à au moins une hypothèse de l'interprétation sont réalisées comme étapes partielles (6, S3) en parallèle dans le temps.

5. Procédé selon l'une quelconque des revendications précédentes,
**caractérisé en ce**
**qu'**un modèle environnemental déterminé par fusion de données de capteur est utilisé comme au moins une partie du jeu de données d'environnement (13).

6. Dispositif de commande pour un véhicule automobile (7) comprenant une unité d'évaluation (10) comprenant une architecture de traitement (11) parallèle qui est réalisée pour la réalisation d'un procédé selon l'une quelconque des revendications précédentes.

7. Véhicule automobile (7) présentant au moins un capteur environnemental (8) et un dispositif de commande (9) selon la revendication 6.
